# EUROPÄISCHE PATENTSCHRIFT

(11) **EP 1 261 670 B1**
(45) Veröffentlichungstag und Bekanntmachung des Hinweises auf die Patenterteilung: **10.09.2003**
(21) Anmeldenummer: 01948906.1
(22) Anmeldetag: 29.01.2001
(51) Int. Cl.: C09D 167/00, C09D 133/06

(54) **WÄRMEHÄRTBARE BESCHICHTUNGSMASSEN**
THERMOSETTING COATING MASS
MATIERES DE REVETEMENT THERMODURCISSABLES

(30) Priorität: 31.01.2000 DE 10004136
(43) Veröffentlichungstag der Anmeldung: 04.12.2002
(73) Patentinhaber: EMS-Chemie AG, 7013 Domat/Ems (CH)
(72) Erfinder: KAPLAN, Andreas, CH-7000 Chur (CH); REICH, Albert, CH-7014 Trin (CH)
(74) Vertreter: Pfenning, Meinig & Partner
(86) Internationale Anmeldenummer: EP0100938
(87) Internationale Veröffentlichungsnummer: WO01057148

(56) Entgegenhaltungen:
- WO-A-94/03545

## Beschreibung

Die Erfindung betrifft eine wärmehärtbare Beschichtungsmasse die aus einem carboxylfunktionellen Polyester oder einem Polyacrylat und einem spezielle ausgewählten Vernetzer einem blockierten β-Hydroxyalkylamid besteht.

Pulverlacke, die als Bindemittel carboxylfunktionelle Polyester und β-Hydroxyalkylamide enthalten, sind bereits seit längerem bekannt.

US 4,801,680 beschreibt Pulverlacke auf Basis von carboxlyfunktionellen Polyestern und β-Hydroxyalkylamiden, wobei der Polyester einen Tg im Bereich von 30 °C bis 85 °C und eine Säurezahl von etwa 20 bis 85 [mg KOH/g] aufweist und das Equivalentverhältnis von β-Hydroxyalkylamidequivalenten zu Carbonsäureequivalenten im Bereich von 0.6 bis 1.6:1 liegt.

Toxikologisch unbedenkliche Pulverlacke auf Basis von carboxylfunktionellen Polyestern und/oder carboxylfunktionellen Polyacrylaten und β-Hydroxyalkylamiden zeigen sehr gute Witterungsstabilität und sind daher für den Einsatz im Aussenbereich geeignet. Die verwendeten β-Hydroxyalkylamide sollten mindestens zwei β-Hydroxyalkylamidgruppen pro Molekül enthalten, also difunktionell sein.

Heute werden aber vor allem vor allem höherfunktionelle β-Hydroxyalkylamide, wie z.B. die tetrafunktionellen β-Hydroxyalkylamide Bis [N,N'-di(β-hydroxyethyl)]-adipamid und Bis [N,N-di(β-hydroxypropyl)]-adipamid, eingesetzt.

Pulverlacke, die als Härter, höherfunktionelle (tetra oder mehr) β-Hydroxyalkylamide enthalten, haben noch gewisse Nachteile in Bezug auf Oberflächenstörungen. Probleme bereiten ein teilweise noch ungenügender Verlauf und ungenügende Entgasungseigenschaften bei höheren Schichtdicken.

US 5,216,090 beschreibt Pulverlacke auf Basis von carboxylfunktionellen Polyestern und/oder carboxylfunktioneller Polyacrylaten und Gemischen von di- und höherfunktionilen β-Hydroxyalkylamiden, die deutlich verbesserte Verlaufs- und Entgasungseigenschaften zeigen.

Ziel der vorliegenden Erfindung ist es, die Hydroxylgruppen in β-Hydroxyalkylamiden teilweise zu blockieren, um damit deren Funktionalität steuern zu können, zum Zwecke der Verbesserung der Verlaufs- und Entgasungseigenschaften von Pulverlacken auf Basis dieser modifizierten β-Hydroxyalkylamide und carboxylfunktionallen Polyestern und/oder carboxylfunktionellen Polyacrylaten.

Die Aufgabe wird durch die kennzeichneden Merkmale des Patentanspruches 1 gelöst. Die Unteransprüche zeigen vorteilhafte Weiterbildungen auf.

Erfindungsgemäss wird somit vorgeschlagen, eine wärmehärtbare Beschichtungsmasse bereit zu stellen, die einen carbofunktionellen Polyester und/oder ein Polyacrylat enthält, sowie als Härter ein speziell ausgewähltes β-Hydroxyalkylamid. Das erfindungsgemässe β-Hydroxyalkylamid ist dabei so aufgebaut, dass ein Teil der Hydroxylgruppen chemisch blockiert ist mit der Massgabe, dass jedoch mindestens zwei freie OH-Gruppen zur Ausbildung des Polymers im späteren Pulverlack vorhanden sind.

Bevorzugt ist es dabei, wenn das β-Hydroxyalkylamid durch die allgemeine Formel I definiert ist, 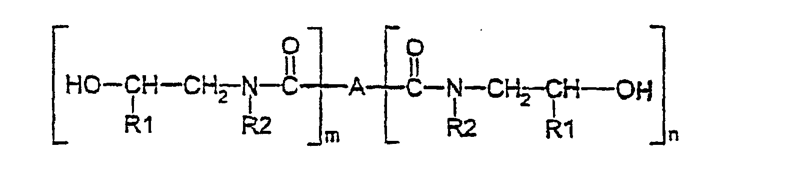 wobei R1 Wasserstoff oder C1 bis C5 Alcyl und R2 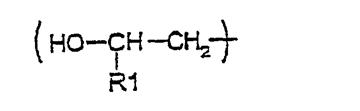 ist, worin R1 die vorstehend angegebene Bedeutung hat und dass in diesem β-Hydroxyalkylamid der allgemeinen Formel I eine oder zwei OH-Gruppen blockiert sind. Als Blockierungsmittel kommen alle an und für sich aus dem Stand der Technik bisher bekannten Möglichkeiten zur Blockierung von Hydroxylgruppen in Frage. Bevorzugt ist es hierbei, wenn die Blockierung mit einer Estergruppe durchgeführt wird. Bevorzugt ist eine Estergruppierung (Formel II), die das Wasserstoffatom am OH ersetzt. 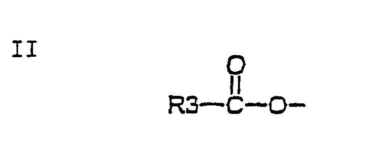 R3 in II ist Wasserstoff, oder ein gesättigter oder ungesättigter alphatischer oder cycloaliphatischer oder aromatischer Rest mit bis zu 60 C-Atomen, der noch zusätzliche Carboxylgruppen enthalten kann oder ein Polymer, wie z.B. ein Polyester oder ein Polyacrylat.

In der allgemeinen Formel I ist A eine chemische Bindung oder eine einwertige oder mehrwertige organische Gruppe, abgeleitet aus gesättigten, ungesättigten oder aromatischen Kohlenwasserstoffgruppen, einschliesslich substituierter Kohlenwasserstoffgruppen mit 2 bis 20 Kohlenstoffatomen, m ist 1 bis 2, n ist 0 bis 2 und m+n ist mindestens 2.

Bevorzugt sind:
- Bis [N,N'-di(β-hydroxyethyl)]-adipamid
- Bis [N,N'-di(β-hydroxypropyl)]-adipamid

Die Herstellung der β-Hydroxylalkylamide nach Formel I erfolgt in bekannter Weise durch Umsatz der Ester der entsprechenden Dicarbonsäure mit Alkanolaminen in der Wärme.

Geeignete carboxylfunktionelle Verbindungen für die Herstellung von β-Hydroxyalkylamiden der Formel I sind einbasische oder mehrbasische aliphatische (gesättigt oder ungesättigt), cycloaliphatische (gesättigt oder ungesättigt) oder aromatische Carbonsäuren mit bis zu 61 C-Atomen, die primäre, sekundäre oder tertiäre Carboxylgruppen enthalten,
wobei einbasische gesättigte aliphatische Carbonsäuren, mit bis zu 22 C-Atomen, bevorzugt sind. Besonders bevorzugt ist Essigsäure. Geeignet sind auch die Chloride dieser Carbonsäuren. Ferner eignen sich carboxylhaltige Polymere, wie die weiter unten beschriebenen carboxyfunktionellen Polyester oder carboxylfunktionellen Polyacrylate.

Geeignete carboxylfunktionalle Polyester für die Herstellung des Pulverlackes können nach den für Polyestern bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenfalls verwendet werden.

Carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder lsphthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, Epsilon-Caprolacton oder Hydroxypivalinsäureester des Neopentylglykols, können ebenfalls verwendet werden.

In geringen Mengen kommen auch Monocarbonsäuren, wie z.B. Benzoesäure, Tertiärbutylbenzoesäure, Hexahydrobenzoesäure und gesättigte aliphatische Manocarbonsäuren, zum Einsatz.

Als geeignete Alkoholkomponenten seien aliphatische Diole genannt, wie z.B. Ethylenglykol, 1,3-Propandiol, 1,2-Propandiol, 1,2Butandiol, 1,3Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexyl)]propan, 1, 4-Dimethylolcyciohexan, Diethylenglykol, Dipropylenglykol und 2,2-Bis-[4-(2-hydroxy)]phenylpropan. In geringeren Mengen kommen auch Polyole zum Einsatz, wie z.B. Glycerol, Hexanthol, Pentaeryltritol, Sorbitol, Trimethylolethan, Trimethylolpropan und Tris(2-hydroxy)isocyanurat.

Auch Epoxidverbindungen können anstelle von Diolen oder Polyolen verwendet werden. Bevorzugt beträgt der Anteil an Neopentylglykol und/oder Propylenglykol in der Alkoholkomponente mindestens 50 Mol-% bezogen auf Gesamtsäuren.

Geignete carboxylfunktionelle Polyacrylate für die Herstellung der Pulverlacke besitzen eine Säurezahl von 10 -300 [mg KOH/g], hergestellt durch Copolymerisation eines Monomerengemisches, bestehend aus,
a) 0 bis 70 Gew. Teilen Methyl(meth)acrylat,
b) 0 bis 60 Gew. Teilen (Cyclo)Alkylestern der Acrylund/oder Methacrylsäure mit 2 bis 18 Kohlenstoffresten im Alkyl- bzw. im Cycloalkylrest,
c) 0 bis 90 Gew. Teilen Vinylaromaten,
d) 1 bis 60 Gew. Teilen olefinisch ungesättigten Carbonsäuren,
wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(methyl)acrylat, n-Propyl(meth)acrylat, lsopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornyl-methacrylat, 3,3,5-Trimethylcyclohexylmethacrylat und Stearylmethacrylat.

Als Monomere c) kommen z.B. Styrol, Vinyltoluol und β-Ethylstyrol in Betracht.

Beispiele für d) sind Acryl- und Methacrylsäure, die auch bevorzugt eingesetzt werden, wie auch Crotonsäure, Itacansäure Fumarsaure, Maleinsäure und Citraconsäure.

Die Herstellung der Copolymerisate kann durch Copolymersisation der beispielhaft genannten Monomere a) bis d) nach üblichen radikalischen Polymerisationsverfahren erfolgen, wie beispielsweise Lösungs-, Emulsions-, Perl- oder Substanzpolymerisation, Dabei werden die Monomeren bei Temperaturen von 60 bis 160 °C, vorzugsweise 80 bis 150 °C, in Gegenwart von Radikalbildnern und gegebenfalls Molekulargewichtsreglern copolymerisiert.

Die Herstellung der carboxylfunktionellen AcrylatCopolymerisate erfolgt in inerten Lösungsmitteln. Geeignete Lösungsmittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton. Methylethylketon, Methylisobutylketon, Methyl-n-amylketon, Methylisoamylketon oder beliebige Gemische derartiger Lösungsmittel.

Die Herstellung der Coploymerisate kann kontinuierlich oder diskontinuierlich erfolgen. Üblicherweise wird in einen Polymerisationsreaktor gleichmässig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliChe Copolymere können auch hergestellt werden, indem man die Reaktionsmischung mit konstanter Geschwindigkeit in einen Rührkessel einlaufen lässt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 25 bar durchgeführt werden. Die Initiatoren werden in Mengen von 0.05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaieronitril, 1,1'-Azobis-1-cyclohexannitril und 2,2'-Azo-bisisobuttersäurealkyester; symmetrische Diacylperoxide, wie z.B. Acetyl-, Propionyl- oder Butyrylperoxid, mit Brom-, Nitro-, Methyl- oder Methoxygruppen substituierte Benzoyiperoxide, Laurylperoxide; symmetrische Peroxydicarbonate, z.B. tert.-Butylperbenzoat, Hydroperoxide, wie beispielsweise tert.-Butylhydroperoxid, Cumolhydroperoxid, Dialkylperoxide, wie Dicumylperoxid, tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können In Mengen von 0.1 bis 10 Gew.-% bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozess zugeführt werden, bei dem das Lösungsmittel beispielsweise in einem Ausdampfextruder oder Sprühtrockner bei ca. 120 bis 160 °C und einem Vakuum von 100 bis 300 mbar entfernt und die erfindungsgemäss zu verwendenden Capolymerisate gewonnen werden.

Das Equivalentverhältnis von β-Hydroxyalkylamidequivalenten zu Carbonsäureequivalenten liegt im Bereich von 0.6 bis 1.6:1.

Für die Herstellung von Pulverlacken können die üblichen Pigmente und/oder Füllstoffe und/oder Additive verwendet werden.

Dabei handelt es sich um Additive aus der Gruppe Beschleuniger, Verlauf- und Entgasungsmittel, Hitze-, UV- und/oder HALS-Stabilisatoren und/oder Triboadditive sowie erforderlicherweise um Mattierungsmittet, wie z.B. Wachse.

Die Herstellung von Pulverlacken erfolgt vorzugsweise in der Schmelze durch gemeinsame Extrusion sämtlicher Formulierungsbestandteile bei Temperaturen zwischen 60 bis 140 °C. Das Extrudat wird anschliessend abgekühlt, gemahlen und auf eine Korngrösse kleiner als 90 µm abgesiebt. Grundsätzlich sind auch andere Verfahren zur Herstellung der Pulverlacke geeignet, wie z.B. Vermischen der Formulierungsbestandteile in Lösung und anschliessende Ausfällung oder destillative Entfernung dix Lösemittel.

Die Appikation der erfindungsgemässen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Der Verlauf wird an beschichteten Blechen, die eine Filmdicke von ca. 60 µm aufweisen, bestimmt. Als Bemessungsgrundlage dient eine Einteilung von 1-5, wobei 1 der beste und 5 der schlechteste Verlauf ist.

Die Entgasung wird an beschichteten Blechen, die eine aufsteigende Filmdicke von 30 bis 200 µm aufweisen, bestimmt. Als Entgasungsgrenze dient die Filmdicke, bei der die ersten Pinholes auftreten.

### Vergleichsbeispiel

560.5 g Grilesta P 810 (carboxylfunktioneller Copolyester der Fa. UCB (B), mit einer Säurezahl von 33 [mg KOH/g] und einem Tg von ca. 60 °C), 29.5 g Primid XL 552

(Bis [N,N'-di(-hydroxyethyl)]-adipamid der Fa. EMS-Chemie AG (CH)), 400 g Kronos CI 2160 (TiO2 der Fa. Kronos (D)), 8 g Resiflow PV 88 (Verlaufmittel auf Polyacrylat-Basis, Handelsprodukt der Fa. Worleé-Chemie GmbH), und 2 g Benzoin werden in einem Henschelmischer bei 700 Upm während 30 sek trocken gemischt und anschliessend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0.8mm)) appliziert und bei einer Einbrenntemperatur von 180 °C während 15 Minuten in einem Elektroofen gehärtet.

### Beispiel 1

320 g (1 mol) Bis [N,N'-di( -hydroxyethyl)]-adipamid mit einer Hydroxylzahl von 700 mg KOH/g werden bei 130 °C aufgeschmolzen. Zu der Schmelze werden bei 130 °C 60 g Essigsäure (100 %) innerhalb von einer Stunde unter Rühren zugetropft. Nach einer Nachreaktionszeit von 30 Minuten bei 130 °C wird bei derselben Temperatur ein Vakuum von 300 mbar angelegt und das entstandene Reaktionswasser abgezogen. Die Schmelze wird abgekühlt und anschliessend zerkleinert. Die Hydroxylzahl des Produktes beträgt 525 mg KOH/g.

### Beispiel 2

554.6 g Grilesta P 810 (carboxylfunktioneller Copolyester der Fa. UCB (B), mit einer Säurezahl von 33 [mg KOH/g] und einem Tg von ca. 60 °C), 35.4 g des Produktes aus Beispiel 1, 400 g Kronos CI 2160 (TiO2 der Fa. Kronos (D)), 8 g Resiflow PV 88 (Verlaufmittel auf Polyacrylat-Basis, Handelsprodukt der Fa. Worleè-Chemie GmbH), und 2 g Benzoin werden in einem Henschelmischer bei 700 Upm während 30 sek trocken gemischt und anschliessend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0.8mm)) appliziert und bei einer Einbrenntemperatur von 180 °C während 15 Minuten in einem Elektroofen gehärtet.

Tabelle 1 zeigt die Pulverlackeigenschaften.

**Tabelle 1**

| | Gelierzeit [sec] nach DIN 55990 bei 200 °C | Reverse Impact [inch pound] nach ASTM D2794 | Verlauf Skala 1-5 | Entgasungs-grenze [µm] |
|---|---|---|---|---|
| Vergleichsbeispiel | 90 | 160 | 3 | 80 |
| Beispiel 2 | 155 | 160 | 1 | 120 |

## Patentansprüche

1. Wärmehärtende Beschichtungsmasse bestehend aus
(A) einem carboxylfunktionellem Polyester, hergestellt durch eine Kondensationsreaktion aus aliphatischen und/oder cycloaliphatischen Polyolen mit alipahtischen und/oder cycloaliphatischen und/oder aromatischen Polycarbonsäure und Anhydriden, wobei der Polyester einen Tg im Bereich von 30 °C bis 80 °C und eine Säurezahl von etwa 20 bis 100 [mg KOH/g] aufweist, und/oder einem carboxylfunktionellem Polyacrylat, hergestellt durch Polymerisation von ungesättigten Verbindungen, wobei das Polyacrylat eine Säurezahl von 20 bis 300 [mg KOH/g] aufweist, und
(B) einem β-Hydroxyalkylamid, dass durch die Formel I definiert ist,
Formel I 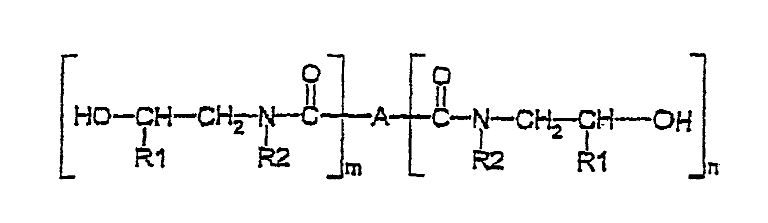 wobei R1 Wasserstoff oder C1-C5-Alkyl und R2 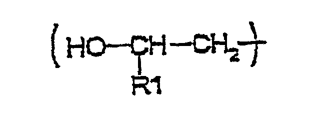 ist, worin R1 die zuvor angegebene Bedeutung hat und dass ein oder zwei OH-Grupppen blockiert sind und A eine chemische Bindung ist oder eine einwertige oder mehrwertige organische Gruppe, abgeleitet aus gesättigten, ungesättigten oder aromatischen Kohlenwasserstoffgruppen, ein-- schliesslich substituierter Kohlenwasserstoffgruppen mit 2 bis 20 Kahlenstoffatomen, m ist 1 bis 2, n ist 0 bis 2 und m+n ist mindestens 2.
wobei das Equivalentverhältnis von β-Hydroxyalkylamidequivalenten zu Carbonsäureequivalenten im Bereich von 0.6 bis 1.6:1 liegt und gegebenenfalls Pigmente und/oder Füllstoffe und/oder Hitzestabilsatoren und/oder Triboadditive und/oder weitere Additive, wie z.B. Verlauf- und Entgasungsmittel.

2. Wärmehärtende Beschichtungsmasse nach Anspruch 1 , **dadurch gekennzeichnet, dass** die OH- Gruppe durch 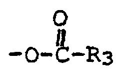 blockiert ist, wobei R₃ Wasserstoff, oder ein gesättigter oder ungesättigter alphatischer oder cycloalphatischer oder aromatischer Rest mit bis zu 60 C-Atomen ist, der noch zusätzliche Carboxylgruppen enthalten kann oder ein Polymer, wie z.B. ein Polyester oder ein Polyacrylat ist.

3. Wärmehärtende Beschichtungsmasse nach Anspruch 1 oder 2, **dadurch gekennzeichnet, dass** die β-Hydroxyalkylamide nach Formel II
- Bis [N,N'-di(-hydroxyethyl)]-adipamid
- Bis [N,N'-di(-hydroxypropyl)]-adipamid
sind.

4. Verfahren zu Herstellung von Pulverlacken, **dadurch gekennzeichnet, dass** man in der Schmelze durch gemeinsame Extrusion sämtlicher Formulierungsbestandteile der Beschichtungsmassen nach einem der Ansprüche 1 bis 3 sowie zusätzlich übliche Pigmente und/oder Füllstoffe und/oder Additive, bei Temperaturen zwischen 60 und 140 °C, ein Extrudat herstellt, dieses anchliessend abkühlt, mahlt und auf eine Kornrösse von < 90 µm absiebt.

5. Verwendung der Beschichtungsmassen nach einem der Ansprüche 1 bis 3 als Schutzschichten.

## Claims

1. Thermosetting coating material comprising
A) a carboxyl-functional polyester produced by a condensation reaction from aliphatic and/or cycloaliphatic polyols with aliphatic and/or cycloaliphatic and/or aromatic polycarboxylic acid and anhydrides, the polyester having a Tg in the range of 30°C to 80°C and an acid value of approximately 20 to 100 (mg KOH/g) and/or comprising a carboxyl-functional polyacrylate produced by polymerisation of unsaturated compounds, the polyacrylate having an acid value of 20 to 300 (mg KOH/g), and
B) a β-hydroxyalkylamide which is defined by Formula I, 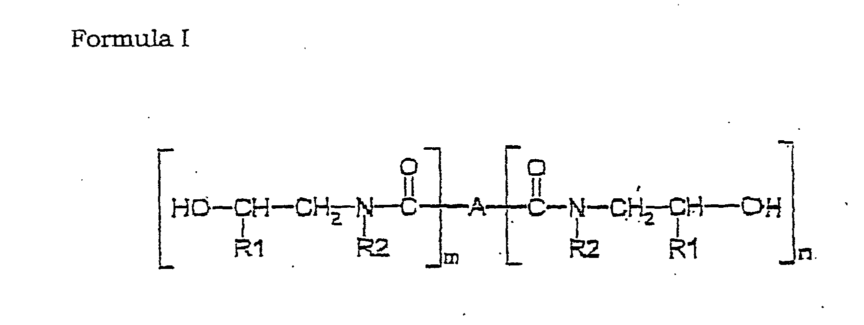 R1 being hydrogen or C1-C5 alkyl and R2 being 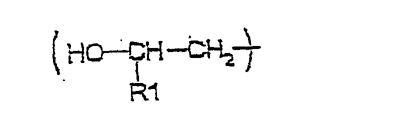
wherein R1 has the previously indicated meaning and that one or two OH groups are masked and A is a chemical bond or a monovalent or multivalent organic group derived from saturated, unsaturated or aromatic hydrocarbon groups including substituted hydrocarbon groups with 2 to 20 carbon atoms, m is 1 to 2, n is 0 to 2 and m + n is at least 2, the equivalent ratio of β-hydroxyalkylamide equivalents to carboxylic acid equivalents being within the range of 0.6 to 1.6 : 1, and if necessary pigments and/or fillers and/or heat stabilisers and/or triboadditives and/or further additives, such as for example flow control and degassing agents.

2. Thermosetting coating material according to claim 1, **characterised**
**in that**
the OH group is masked by 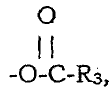 R₃ being hydrogen, or a saturated or unsaturated aliphatic or cycloaliphatic or aromatic group with up to 60 C atoms, which group can contain additional carboxyl groups or a polymer, such as e.g. a polyester or a polyacrylate.

3. Thermosetting coating material according to claim 1 or 2, **characterised in that** the β-hydroxyalkylamides according to Formula II are
- bis [N, N'-di (-hydroxyethyl)-adipamide]
- bis [N, N'-di (-hydroxypropyl)-adipamide].

4. Method for producing powder coatings, **characterised in that** an extruded material is produced in the melt by communal extrusion of the entire formulation components of the coating materials according to one of the claims 1 to 3 and also additionally common pigments and/or fillers and/or additives at temperatures between 60 and 140°C, said extruded material is then cooled, ground and screened to a particle size of < 90 µm.

5. Use of coating materials according to one of the claims 1 to 3 as protective layers.

## Revendications

1. Matière de revêtement thermodurcissable constituée de
(A) un polyester à fonction carboxy, préparé par une réaction de condensation à partir de polyols aliphatiques et/ou cycloaliphatiques avec des acides polycarboxyliques et anhydrides aliphatiques et/ou cycloaliphatiques et/ou aromatiques, le polyester ayant une Tg dans la plage allant de 30°C à 80°C et un indice d'acide d'environ 20 à 100 (mg de KOH/g), et/ou un polyacrylate à fonction carboxy, préparé par polymérisation de composés insaturés, le polyacrylate ayant un indice d'acide de 20 à 300 (mg de KOH/g), et
(B) un β-hydroxyalkylamide qui est défini par la formule I 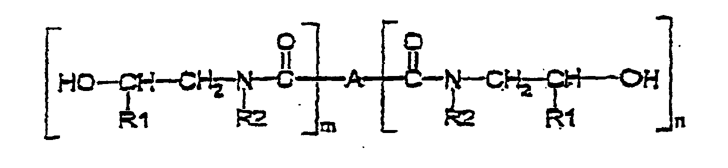 R1 étant un atome d'hydrogène ou un groupe alkyle en C₁-C₅ et R2 étant 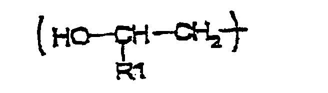
où R1 a la signification donnée précédemment et,
un ou deux groupes OH étant bloqués et A étant une liaison chimique ou un groupe organique monovalent ou plurivalent, dérivé de groupes hydrocarbonés saturés, insaturés ou aromatiques, y compris des groupes hydrocarbonés substitués ayant de 2 à 20 atomes de carbone, m étant égal à 1 ou 2, n allant de 0 à 2 et la somme m+n étant au moins égale à 2, le rapport d'équivalents des équivalents de β-hydroxyalkylamide aux équivalents d'acide carboxylique étant dans la plage allant de 0,6 à 1,6:1, et éventuellement de pigments et/ou de charges et/ou de stabilisants à la chaleur et/ou d'additifs tribologiques et/ou d'autres additifs, tels que des agents d'étalement et des agents de dégazage.

2. Matière de revêtement thermodurcissable selon la revendication 1,
**caractérisée en ce que** le groupe OH est bloqué par 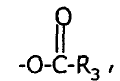 R₃ étant un atome d'hydrogène ou un radical aliphatique ou cycloaliphatique insaturé ou insaturé ou aromatique ayant jusqu'à 60 atomes de carbone, qui peut contenir encore des groupes carboxy supplémentaires, ou un polymère, comme par exemple un polyester ou un polyacrylate.

3. Matière de revêtement thermodurcissable selon la revendication 1 ou 2, **caractérisée en ce que** les β-hydroxyalkylamides de formule II sont
le bis[N,N'-di(hydroxyéthyl)]adipamide
le bis[N,N'-di(hydroxypropyl)]adipamide.

4. Procédé pour la fabrication de peintures en poudre, **caractérisé en ce qu'**on prépare un extrudat dans la masse fondue par extrusion commune de tous les composants de formulation des matières de revêtement selon l'une quelconque de revendications 1 à 3 ainsi qu'en outre des pigments usuels et/ou des charges usuelles et/ou des additifs usuels, à des températures comprises entre 60 et 140°C, ensuite on le refroidit, on le broie et on le tamise à une taille de grain de <90 µm.

5. Utilisation des matières de revêtement selon l'une quelconque des revendications 1 à 3 en tant que couches protectrices.
